(19) Europäisches Patentamt

European Patent Office

Office européen des brevets

(11) EP 0 744 847 B1

(12) FASCICULE DE BREVET EUROPEEN

(45) Date de publication et mention
de la délivrance du brevet:
**24.08.2005 Bulletin 2005/34**

(51) Int Cl.⁷: **H04L 1/16**, H04L 1/22,
H04L 12/56, H04B 1/74,
H03M 13/27

(21) Numéro de dépôt: **96201328.0**

(22) Date de dépôt: **14.05.1996**

(54) **Système de transmission d'information utilisant, en redondance, au moins deux canaux**

Redundantes Datenübertragungssystem mit mindestens zwei Kanälen

Redundant data transmission system using at least two channels

(84) Etats contractants désignés:
**DE FR GB IT SE**

(30) Priorité: **23.05.1995 FR 9506137**

(43) Date de publication de la demande:
**27.11.1996 Bulletin 1996/48**

(73) Titulaire: **Koninklijke Philips Electronics N.V.**
**5621 BA Eindhoven (NL)**

(72) Inventeur: **Bisson, Frédéric**
**75008 Paris (FR)**

(74) Mandataire: **Chaffraix, Jean et al**
**Société Civile SPID,**
**156, Boulevard Haussmann**
**75008 Paris (FR)**

(56) Documents cités:
**EP-A- 0 327 128        EP-A- 0 412 320**
**EP-A- 0 454 246        BE-A- 660 563**
**GB-A- 2 133 954        US-A- 3 665 395**

**Description**

La présente invention concerne un système de transmission utilisant en redondance au moins deux canaux, système comportant :

- un dispositif d'émission comprenant un accès d'entrée, pour recevoir l'information à transmettre, des accès de sortie raccordés auxdits canaux, pour diffuser l'information à transmettre, un premier élément de retard d'émission associé à l'un desdits accès pour retarder l'information à transmettre,
- un dispositif de réception comprenant des accès pour recevoir les informations desdits canaux, un circuit de mesure de qualités des différents canaux, un circuit de branchement pour sélectionner un desdits canaux, un accès de sortie relié au circuit de branchement pour fournir les informations transmises.

Un tel système est décrit dans le brevet US-A-3 665 395 et trouve d'importantes applications dans le domaine des télécommunications où l'on veut s'assurer d'une bonne qualité de transmission en voulant éviter les erreurs et présenter une certaine invulnérabilité aux perturbations.

Le brevet des Etats-Unis d'Amérique n° USP 3 409 875 décrit un système de ce genre. Selon cette technique connue, l'élément de retard apportant un retard T est associé, en permanence, à un des accès de sortie du dispositif d'émission, tandis que l'accès de sortie du dispositif de réception est relié à l'un des canaux. Un circuit de mesure de la qualité analyse par comparaison les signaux provenant des deux canaux et dès qu'une discordance est signalée, l'accès de sortie du dispositif de réception est connecté sur l'autre canal qui sert de canal de secours pendant une durée fixe T. Ainsi, on obtient une bonne efficacité contre les perturbations, groupées dans un intervalle de temps inférieur à T, qui affectent simultanément les canaux. Cependant ce système ne convient pas lorsque les canaux amènent un retard variable et imprévisible aux signaux qu'ils transportent, car il n'est plus possible d'analyser par coïncidence la qualité de l'information. Par ailleurs, ce système n'élimine pas les erreurs qui interviennent sur le canal de secours, quand ce dernier est connecté à l'accès de sortie.

La présente invention propose un système du genre mentionné la revendication 1.

La description suivante faite en regard des dessins ci-annexés, le tout donné à titre d'exemple non limitatif, fera bien comprendre comment l'invention peut être réalisée.

La figure 1 montre un premier mode de réalisation d'un système conforme à l'invention.
La figure 2 montre comment l'information à transmettre est organisée, selon un premier aspect de l'invention.
La figure 3 montre un deuxième mode de réalisation préféré d'un système conforme à l'invention.
La figure 4 montre comment l'information à transmettre est organisée, selon ce mode préféré.
La figure 5 montre le détail d'un dispositif de réception faisant partie du système de la figure 4.
La figure 6 montre un exemple de réalisation d'un dispositif de détermination de retard faisant partie d'un système de l'invention.
La figure 7 montre un autre mode de réalisation d'un système conforme à l'invention.
La figure 8 montre un exemple de réalisation d'un dispositif de détermination de retard faisant partie d'un système de l'invention représenté à la figure 7.

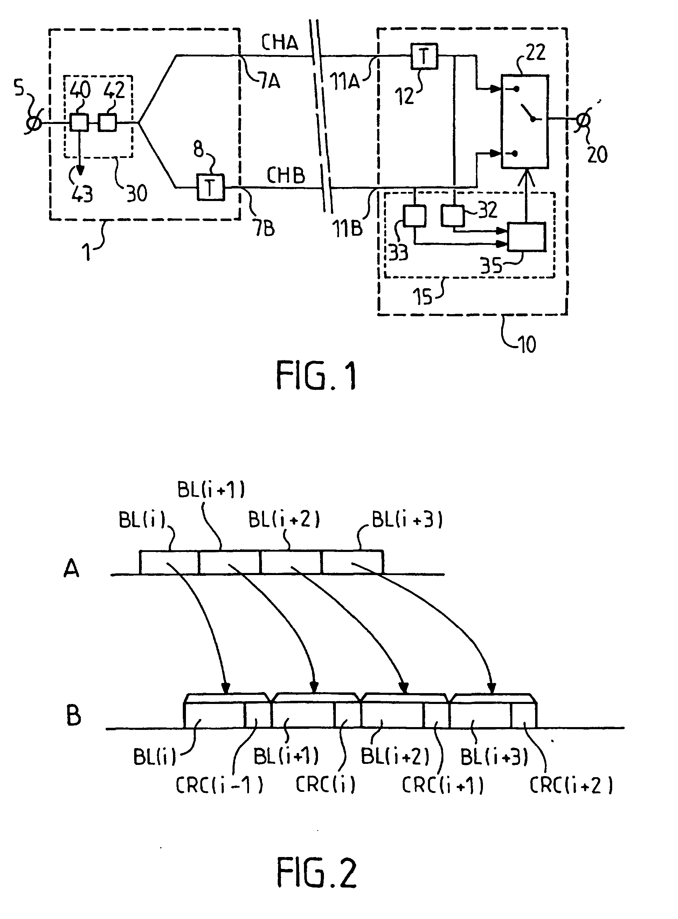

A la figure 1, le système de l'invention est formé d'un dispositif d'émission 1 comportant un accès 5 pour l'émission à transmettre, deux accès 7A et 7B pour fournir la même information de transmission sur des canaux CHA et CHB. Un élément de retard 8 inséré dans le chemin du canal CHB retarde les informations sur ce canal d'une durée T.

Le système est formé aussi d'un dispositif de réception 10 comportant des accès 11A et 11B pour recevoir les informations transmises provenant des canaux CHA et CHB. Il est prévu en outre un élément de retard de réception 12 pour rétablir le retard amené par l'élément d'émission 8, un circuit de mesure de qualité 15 dont les entrée reçoivent les information transmises et qui déterminent, en fonction de cette mesure, lequel des canaux sera connecté sur l'accès de sortie 20. Pour cela, le circuit 15 agit sur un commutateur 22.

Conformément à l'invention, le système de transmission de la figure 1 comporte, disposé dans le dispositif d'émission, un circuit d'insertion de code pour détection d'erreur portant la référence 30 tandis que le circuit de mesure de qualité 15 est formé de deux circuits analyseurs de code d'erreurs 32 et 33 dont les entrées reçoivent les informations des canaux 11A et 11B. En fonction des erreurs détectées un circuit de commande 35 détermine, en agissant sur le circuit commutateur 22, lequel des canaux doit être connecté à la sortie 20. Le circuit 30 est formé d'un circuit de découpage 40 pour former des blocs à partir de l'information reçue à l'accès 5 et d'un circuit de calcul 42 pour former un code de redondance cyclique relatif à chacun des blocs, élaboré par le circuit de découpage 40. Sur une sortie 43 apparaît un signal pour indiquer le début d'un bloc.

La figure 2 montre comment le code de détection est inséré dans les informations à transmettre provenant de l'accès 5. En A, sur cette figure, on a représenté schématiquement l'information à transmettre qui se présente ici, en guise d'exemple, de manière continue. L'information est découpée en blocs : BL(i), BL(i+1), BL(i+2), BL(i+3)... A chacun de ces blocs est affecté respectivement un code de redondance cyclique CRC(i-1), CRC(i), CRC(i+1), CRC (i+2)... En calculant ce code au niveau réception et en le comparant avec celui qui est transmis, on détermine facilement les blocs contenant au moins une erreur.

Ainsi, grâce à cette mesure de l'invention, non seulement la protection contre les perturbations en forme d'impulsions provoquant des paquets d'erreurs sur les canaux CHA et CHB pendant une durée inférieure à la durée T est assurée, mais en outre, il est possible de déterminer et donc de brancher en sortie du récepteur, bloc par bloc, sans complications inutiles, le canal qui transmet l'information non erronée.

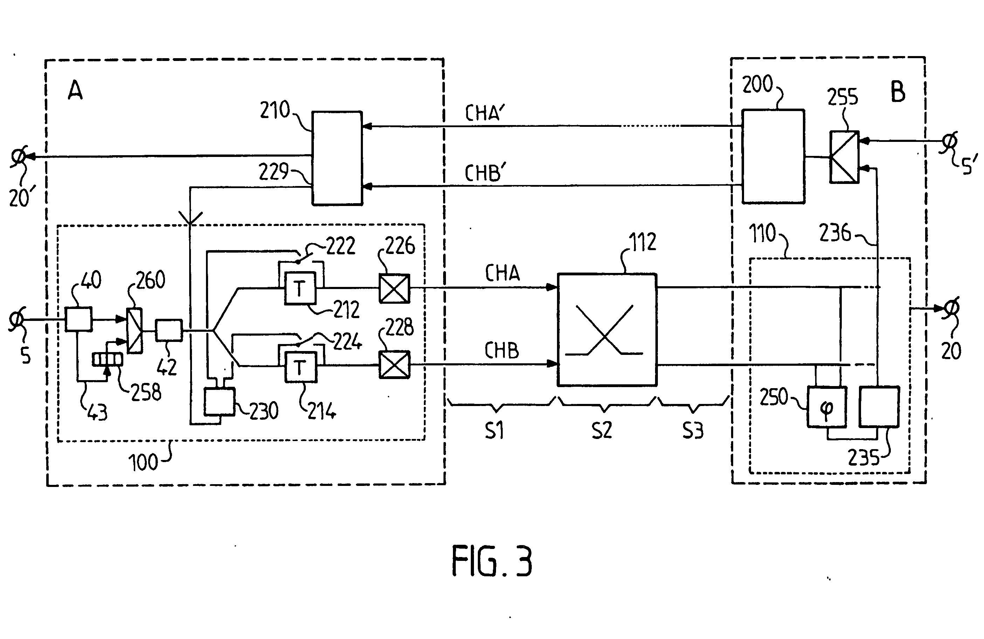

La figure 3 montre un deuxième système conforme à l'invention. Les éléments communs avec ceux de la figure 1 portent les mêmes références. Ce système est formé autour d'une liaison bidirectionnelle qui permet l'échange d'informations entre un site A et un site B. Les informations à transmettre depuis le site A sont appliquées à l'accès 5 et celles à émettre depuis le site B à un accès 5'. Les informations reçues en ces sites se retrouvent à l'accès 20 pour le site B et à un accès 20' pour le site A. Ces sites sont reliés par les canaux CHA et CHB pour le sens qui va du site A au site B et par des canaux CHA' et CHB' pour le sens contraire. Sans sortir du cadre de l'invention, il est possible d'utiliser toute sorte de canaux pour transmettre des informations depuis le site B vers le site A. Par exemple, on peut se dispenser d'utiliser des canaux de même nature. Cependant, dans le cadre de cet exemple décrit et pour faciliter les explications, on admet que tous les dispositifs d'émission et de réception ont des structures identiques.

Les canaux CHA et CHB relient un dispositif d'émission 100 faisant partie du site A avec un dispositif de réception 110 faisant partie du site B. Les canaux CHA' et CHB' relient un deuxième dispositif d'émission 200 du site B avec un deuxième dispositif de réception 210 du site A. On notera que, notamment les canaux CHA et CHB peuvent emprunter, selon certaines configurations, un réseau 112 qui peut introduire une compensation de l'effet recherché par la mise en oeuvre du système de la figure 1. C'est par exemple le cas, pour une liaison d'un débit de 2 Mbit/s, quand chaque canal se décompose en une suite formée d'une section de transmission S1 sur cuivre, (telle qu'une section HDSL), d'une section de transmission S2 comportant le réseau 112 du type SDH (telle qu'un VC12) et d'une seconde section de transmission S3 sur cuivre (HDSL). Si le réseau synchrone 112 compense le retard introduit par le dispositif d'émission 100 sur le canal CHB, comme cela est représenté à la figure 1, en retardant le canal CHA par rapport au canal CHB, les deux canaux peuvent se retrouver en phase (ou approximativement) au début de la deuxième section S3. La probabilité que ce cas se présente est d'autant plus élevée que le retard optimal T, et la différence de marche introduite par le réseau synchrone, sont typiquement du même ordre de grandeur, à savoir quelques millisecondes. Le masquage des erreurs provoquées par un bruit en forme d'impulsion sur la deuxième section S3 (HDSL) est alors inopérant.

Pour résoudre ce problème, conformément à l'invention, dans le système de la figure 3, on a prévu de mettre des organes de retard 212 et 214 disposés sur la figure 3 dans le dispositif d'émission 100 et munis respectivement de commandes d'inhibition 222 et 224 représentées sous forme d'interrupteurs court-circuitant ou non ces organes de retard. Ces organes de retard 212, 214 sont connectés respectivement au canaux CHA et CHB au moyen de circuits de modulation 226 et 228 qui permettent la propagation par ces canaux. Un circuit de commande d'inhibition 230 commande ces courts-circuits. Pour effectuer ces courts-circuits, le circuit 230 est piloté par une information d'inhibition CT élaborée au niveau du dispositif de réception 110 et qui est transmise par le canal de retour qui est constitué par les canaux CHA' et CHB'. Cette information d'inhibition est formée par un dispositif de détermination de retard 235, à partir notamment du déphasage des informations transmises par les canaux CHA et CHB. La valeur de ce déphasage est mesurée par un circuit de mesure de déphasage 250 dont les deux entrées reçoivent lesdites informations transmises par les canaux CHA et CHB. Le dispositif de détermination de retard 235 fournit, à sa sortie 236, l'information d'inhibition à un multiplexeur 255 qui multiplexe cette information avec celle à transmettre depuis l'accès 5' pour qu'elle soit transmise, par l'intermédiaire du dispositif d'émission 200 vers le circuit de commande d'inhibition 230 du site A via les canaux CHA' et CHB'.

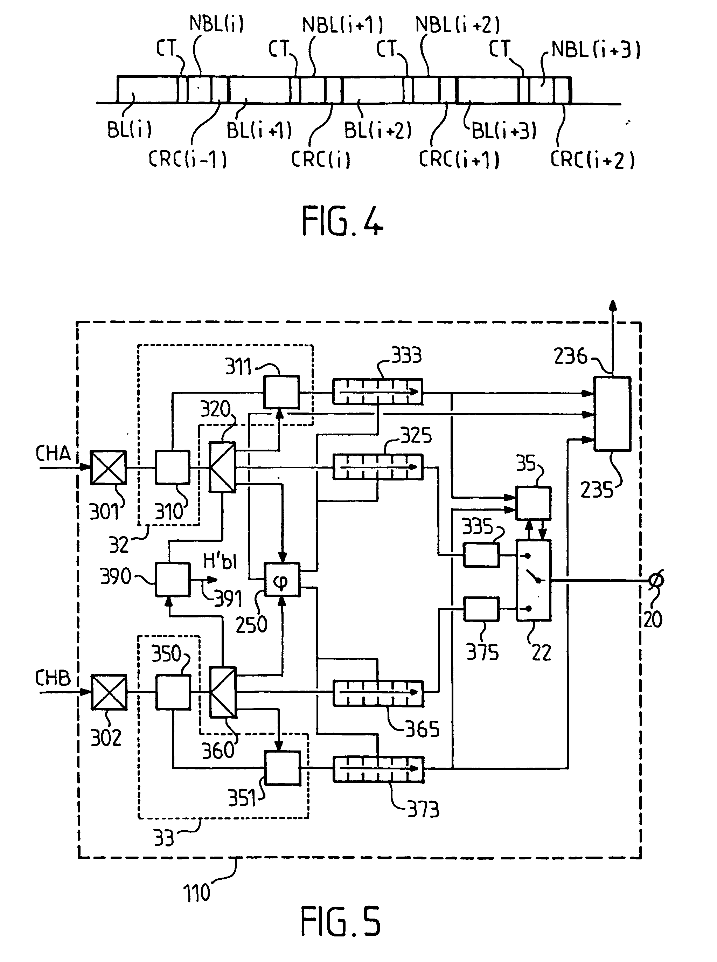

Pour déterminer cette information CT, il faut d'abord mesurer la phase qui existe entre les informations émises par chacun des canaux. Pour cela, on affecte à chaque bloc élaboré par le circuit de découpage 40 un numéro de code NBL(i), NBL(i+1), NBL(i+2), NBL(i+3)... Ces numéros de codes proviennent d'un compteur modulo N 258 qui compte les signaux à la sortie 43. Ces numéros sont insérés dans l'information à transmettre par un multiplexeur 260. Le circuit de calcul 42 calcule alors le code de correction d'erreur sur toute l'information à la sortie du multiplexeur 260. Ceci est montré à la figure 4 qui montre l'organisation de la transmission des informations sur les canaux CHA' et CHB'. Les blocs indiqués sont relatifs aux échanges d'informations entre le dispositif 200 et le dispositif 210 dans le cas d'une transmision bidirectionnelle symétrique. L'information CT peut être structurée autrement dans le cas d'une transmission asymétrique. Le circuit de mesure de déphasage 250 détermine ce déphasage en mesurant le temps qui sépare l'apparition d'un même numéro de bloc sur les deux canaux CHA et CHB.

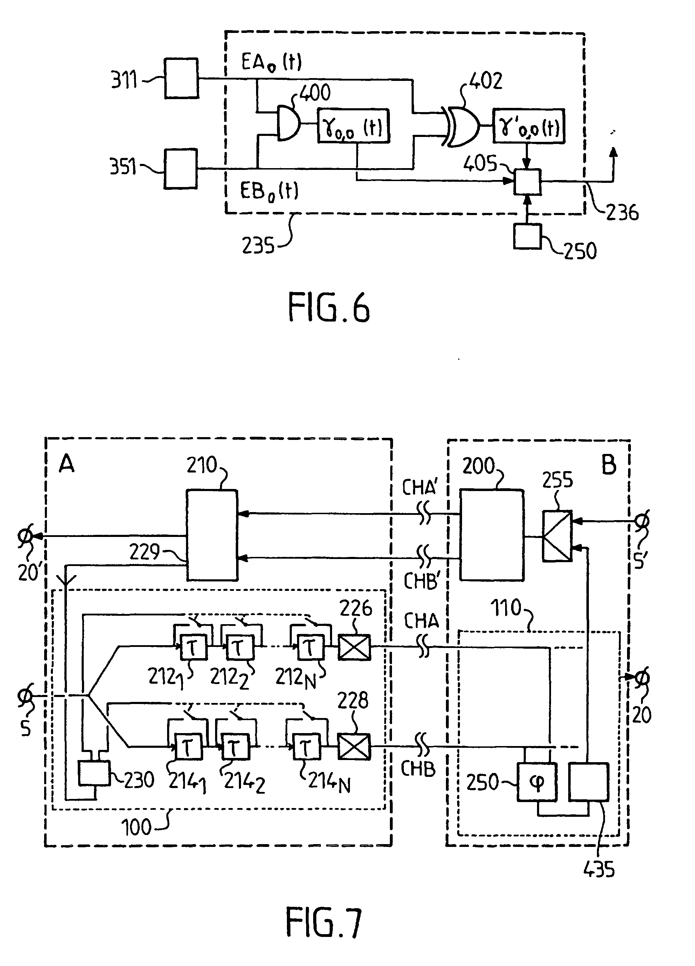

La figure 5 montre en détail le dispositif de réception 110.

Il se compose tout d'abord de deux circuits de démodulation 301 et 302 qui effectuent les opérations inverses de celles des circuits 226 et 228 et qui sont attribués respectivement aux canaux CHA et CHB. Sur cette figure, on a détaillé un peu plus les circuits analyseurs de code d'erreur 32 et 33. Le circuit 32 est formé d'un circuit de calcul de code d'erreur 310 et d'un circuit de comparaison de codes 311 qui effectue la comparaison des codes calculés par le circuit 310 et du code transmis, calculé par le circuit 42 et restitué à la sortie d'un démultiplexeur 320. Ce démultiplexeur 320 fournit aussi l'information utile, les blocs BL(i), à un organe de retard variable 325 et les numéros de blocs NBL(i) au circuit 250. L'information de comparaison à la sortie du circuit 311, qui détermine l'état erroné ou non des blocs, est appliquée à un deuxième organe à retard variable 333 comportant le même nombre de cellules que l'organe 325. Les informations à la sortie de l'organe 325 sont systématiquement retardées par un organe de retard 335 avant d'être appliquées au commutateur 22. On retrouve les mêmes éléments relatifs au canal CHB. Ainsi, les éléments : 350, 351, 360, 365, 373 et 375 sont à rapprocher des éléments 310 , 311, 320, 325, 333 et 335.

Un circuit 390 fournit des signaux H'bl pour indiquer le début d'un bloc sur sa sortie 391 en fonction de signaux récupérés au niveau des démultiplexeurs 320 et 360. Ces signaux correspondent aux blocs remis en phase à la sortie des organes 325 et 365. Cette remise en phase est obtenue par le circuit 250 qui détermine le retard à apporter par les organes 325 et 365, ainsi que le retard à apporter par les organes 333 et 373, de sorte que les informations soient bien en phase aux entrées des organes de retard 335 et 375.

On suppose le retard appliqué sur le canal CHB. Si l'on note :

- $T_A$ le temps de transmission du canal CHA entre l'entrée du circuit 226 et la sortie du circuit 301,
- $T_B$ le temps de transmission du canal CHB entre l'entrée du circuit 228 et la sortie du circuit 302, alors le circuit 250 détermine le retard $T_1$ à appliquer aux organes 325 et 333 et le retard $T_2$ à appliquer aux organes 365 et 373 de sorte que $T_A + T_1 = T + T_B + T_2$ et que $T_2$ soit le plus petit possible. La remise en phase est possible tant que $|T + T_B - T_A| \leq N'$, N' étant égal à la partie entière de N/2.

Les organes de retard 335 et 375 laissent le temps au circuit de commande 35 de disposer des états des blocs avant que ceux-ci ne sortent desdits organes de retard.

Il est à signaler que l'on peut se rapporter aux documents de brevet européens suivants en ce qui concerne les problèmes de commutation pour des canaux redondants :

EP 0454249 et EP 0454246.

Le circuit de détermination de retard 235 détermine l'organe de retard 212 ou l'organe 214 à court-circuiter en fonction des mesures de déphasage, comme cela a déjà été dit. Ceci constitue l'information CT qui est transmise vers le dispositif d'émission 100.

Si le canal retardé, CHB par exemple, d'une valeur T au niveau du dispositif d'émission 1, n'est finalement pas en retard d'au moins T par rapport au canal CHA, ce qui est mesuré au niveau du circuit 250, c'est que le réseau de transmission de la section S2 compense le retard introduit par le dispositif d'émission 1. Dans ce cas, le dispositif de détermination de retard 235 émet la commande d'inhibition de l'organe 214 et donc d'activation de l'organe 212. Sinon, le dispositif de détermination de retard 235 maintient la commande d'inhibition de l'organe 214 et donc d'activation de l'organe 212.

Le choix d'appliquer le retard T résulte d'un compromis entre d'une part, les paquets d'erreurs que l'on souhaite masquer et d'autre part, les spécifications de service des liaisons bidirectionnelles, qui imposent au contraire des délais de transmission les plus courts possibles. Par ailleurs, la présence de bruit impulsionnel n'est constatée que sur certaines lignes du réseau de distribution. Afin de n'introduire un retard que dans les cas où cela est nécessaire, il serait possible, lors de la phase de mise en service et de qualification de la liaison, de procéder à des mesures de bruit impulsionnel. Toutefois, les coûts opérationnels de telles mesures peuvent être prohibitifs. De plus, le bruit en forme d'impulsion provient d'une activité électromagnétique qui peut ne se manifester qu'à certaines périodes de la journée. Quand les applications de l'utilisateur peuvent s'affranchir de changements occasionnels du délai de transmission, il peut être souhaitable de n'appliquer le retard qu'aux périodes où le bruit impulsionnel est présent.

Un mode de réalisation d'un circuit de détermination 235, schématisé par la figure 6, permet d'automatiser l'application du retard en détectant la présence du bruit impulsionnel afin d'émettre une commande d'activation ou d'inhibition du retard T sur le canal approprié. La détection de présence de bruit impulsionnel se fait en comparant, sur une période d'intégration Ti, la proportion de blocs simultanément erronés par rapport au nombre total de blocs erronés, une proportion élevée étant un indice de présence de bruit impulsionnel.

Les états des blocs reçus sur le canal CHA, notés EA(t), issus du circuit 311 et les états des blocs reçus sur le canal CHB, notés EB(t), issus du circuit 351, servent de paramètres d'entrée à deux intégrateurs notés $\gamma_{0,0}(t)$, et $\gamma'_{0,0}(t)$ à la figure 6.

- $\gamma_{0,0}(t)$, compte le nombre de "1" qui résultent de l'opération effectuée par une porte "ET LOGIQUE" portant la référence 400 et calculée à partir des états EA(t) et EB(t), la convention étant prise que l'état d'un bloc vaut "1" quand ledit bloc est erroné.

- $\gamma'_{0,0}(t)$ utilise la fonction "OU EXCLUSIF" effectuée par une porte 402.

Ainsi, les valeurs données par chaque intégrateur s'expriment à l'instant t, de la manière suivante :

$$\gamma_{0,0}(t) = 2 \times \int_{t-Ti}^{t} [EA(x) . EB(x)] \, dx$$

$$\gamma'_{0,0}(t) = \int_{t-Ti}^{t} [EA(x) \oplus EB(x)] \, dx$$

où . représente le ET logique

$\oplus$ le OU EXCLUSIF

et $\gamma_{0,0}(t)$ mesure le nombre de blocs simultanément erronés sur la section $S_3$.

La durée d'intégration Ti est un paramètre de configuration du récepteur. Plus cette période est grande, moins souvent le dispositif de détermination de retard 235 activera ou inhibera le retard T, le changement de valeur de T ayant pour effet d'interrompre le service de transmission pendant la durée nécessaire au circuit 250 pour remettre en phase les deux canaux CHA et CHB.

A l'instant t, la proportion Pe(t) de blocs erronés simultanés sur la période Ti, est fournie par le résultat :

$$Pe(t) = \frac{\gamma_{0,0}(t)}{\gamma_{0,0}(t) + \gamma'_{0,0}(t)}$$

Après une phase d'initialisation, de durée Ti, au début de laquelle est effectué le choix du canal CHA ou CHB sur lequel le retard T doit être inhibé et au début de laquelle les intégrateurs sont initialisés à "0", les intégrateurs sont utilisés par le procédé suivant, pour décider d'activer ou d'inhiber le retard T :

Tant que les effets du bruit impulsionnel restent inférieurs à un seuil Ri, le dispositif de détermination de retard 235 force le retard T à 0. Cette condition se vérifie tant que Pe(t) < Ri.

Ri est un paramètre de configuration du dispositif de réception 110.

Si le seuil Ri est franchi, alors le dispositif de détermination de retard 235 fixe le retard à la valeur T jusqu'à ce que Pe devienne à nouveau inférieure à Ri. Le procédé décrit ci-dessus permet d'activer le retard T de manière optimale, quand on configure le dispositif de réception 110 du site B aux valeurs (Ti,Ri) qui caractérisent les performances de transmission perçues par l'utilisateur de la liaison. Un procédé identique convient pour le couple formé par les dispositifs 200 et 210.

Une étude statistique du bruit impulsionnel sur les lignes du réseau de distribution téléphonique, (cf "Wideband impulsive noise survey of the access network", JW Cook, BT Tech Journal, Vol 11, N°3, July 93) montre que la plupart des paquets d'erreurs ont une durée inférieure à 2 ms. Pour le cas particulier de la transmission HDSL pour le transport de services à 2 Mbit/s tramés selon la recommandation G.704 de l'UIT-T, où la durée d'un bloc est de 1 ms, le choix du retard optimal se situe par conséquent entre 1 et 3 millisecondes.

La figure 7 montre un autre mode de réalisation d'un système conforme à l'invention dans lequel il est prévu des moyens pour permettre d'automatiser le choix de la valeur du retard à appliquer à l'émission. Dans ce système, les organes de retard 212 sont formé d'une cascade d'organes de retard $212_1...212_M$ dans le canal CHA et l'organe 214 d'une cascade d'organes de retard $214_1...214_M$ dans le canal CHB. Chacun de ces organes apporte un retard $\tau$ égal à la durée d'un bloc. Ainsi le retard apporté par ces organes 212 et 214 peut varier de 0 à $M\tau$ par incrément de $\tau$. $M\tau$ correspond au retard maximal allouable à la fonction d'annulation d'erreur.

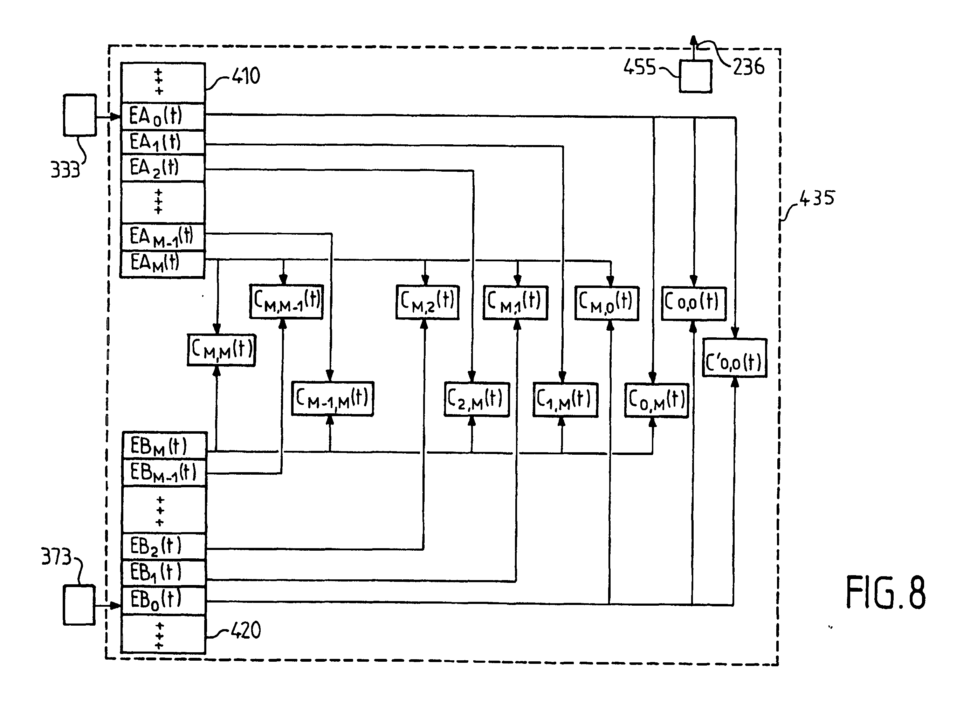

Le principe consiste à anticiper quelle serait l'amélioration de performance obtenue si le retard était diminué de la durée de 1, puis 2, puis 3,... blocs. Si ces anticipations ne donnent pas de résultats satisfaisants, alors le mécanisme d'anticipation recherche l'effet de l'augmentation du retard de la durée d'1, puis 2, puis 3... blocs. La précision du mécanisme est d'autant plus grande que la taille des blocs de la trame considérée est petite par rapport aux longueurs des paquets d'erreurs. Ce mécanisme peut être réalisé de la manière suivante, à l'aide du dispositif de détermination de retard 435 montré à la figure 8 et qui est à rapprocher du dispositif 235 montré à la figure 6. Le procédé est mis en oeuvre par un circuit 455 qui tient compte notamment des informations fournies par les intégrateurs dont il sera question ci-dessous.

Provenant du comparateur 311, en passant par l'organe 333 les états des blocs reçus sur le canal CHA, notés $EA_k(t)$, traversent un registre à décalage 410 composé de M cellules. Provenant du comparateur 351, en passant par l'organe 373, les états des blocs reçus sur le canal CHB, notés $EB_k(t)$, traversent un registre à décalage 420 de la même taille que le registre 410. Ces registres sont décalés au rythme des signaux H'bl élaborés par le circuit 390 (figure 5).

Les valeurs contenues dans les cellules servent de paramètres d'entrée à une série d'intégrateurs de coïncidence, notés $C_{k,l}(t)$ et $C'_{k,l}(t)$, représentés sur la figure 8, qui s'expriment, à l'instant t :

$$C_{k,l}(t) = \int_{t-Ti}^{t} [EA_k(x) . EB_l(x)]\, dx$$

et

$$C'_{k,l}(t) = \int_{t-Ti}^{t} [EA_k(x) \oplus EB_l(x)]\, dx$$

L'ensemble des intégrateurs est utilisé par le procédé suivant, pour déterminer la valeur optimale du retard T valant $m\tau$ à l'instant t et supposé appliqué à l'émission du canal CHB :

Tant que les effets du bruit impulsionnel restent inférieurs au seuil Ri, le dispositif 435 force le retard T à 0. Cette condition se vérifie si $P'_E(t)$ qui, par rapport à $P_E(t)$, prend également en compte le bruit impulsionnel sur la section S1, est inférieur à Ri :

$$P'_E(t) = \frac{1}{2}\left[P_E(t) + \frac{C_{M-m,M}(t)}{C_{M-m,M}(t) + C'_{M-m,M}(t)}\right]$$

Si le seuil Ri est franchi alors :

rechercher le plus grand entier k, compris entre 1 et m, tel que $Rd.C_{M-k,M}(t) \le C_{M,M}(t)$.
Si k existe, alors le dispositif 435 émet la commande de réduire T de la durée de $k\tau$.
Sinon, alors rechercher le plus petit entier k, compris entre 1 et M-m, tel que $Rc.C_{M,M-k}(t) \le C_{M,M}(t)$.
Rd et Rc sont des paramètres de configuration du récepteur. Si k existe, alors le dispositif 435 émet la commande d'augmenter T de la durée de $k\tau$.
Sinon, alors reprendre la détection de seuil Rd.
Sinon, alors reprendre la détection de seuil Ri.

Le procédé décrit ci-dessus permet de régler le retard T de manière optimale, en configurant le couple dispositif d'émission 100 et le dispositif de réception 110 aux valeurs (Ti, Ri, Rd, Rc) qui caractérisent les performances de transmission perçues par l'utilisateur de la liaison. Un tel procédé convient évidemment pour le couple dispositif d'émission 200 et de réception 210.

**Revendications**

1.  Système de transmission utilisant en redondance au moins deux canaux (CHA, CHB), système comportant :

    -   un dispositif d'émission (1, 100) comprenant un accès d'entrée (5), pour recevoir l'information à transmettre sous forme de blocs, des accès de sortie (7A, 7B) raccordés auxdits canaux, pour diffuser l'information à transmettre, un premier élément de retard d'émission (8) associé à l'un desdits accès pour retarder l'information à transmettre,
    -   un dispositif de réception (10, 110) comprenant des accès (11A, 11B) pour recevoir les informations desdits canaux, un circuit de mesure de qualités (15) des différents canaux, un circuit de branchement (22) pour sélectionner un desdits canaux, un accès de sortie (20) relié au circuit de branchement pour fournir les informations transmises,
    -   des deuxièmes éléments de retard d'émission associés aux autres accès de sortie,
    -   des moyens de commande de retard associés à chacun desdits éléments de retard,
    -   un canal de retour allant du dispositif de réception vers le dispositif d'émission,
    -   un circuit de détermination (235) de retard pour piloter, par l'intermédiaire dudit canal de retour, lesdits moyens de commande de retard en fonction des mesures de qualité fournies par le circuit de mesure de qualité,

    **caractérisé en ce que** les mesures de qualités sont fondées sur la détermination du bruit impulsionnel établie à partir de deux intégrateurs $\gamma_{0,0}$ et $\gamma'_{0,0}$, lesdits intégrateurs donnant la présence de bruit impulsionnel par calcul de la proportion entre le nombre de blocs simultanément faux et le nombre total de blocs faux observés sur une période d'intégration donnée.

2.  Système selon la revendication **1**, **caractérisé en ce que** les éléments de retard sont variables et **en ce que** le circuit de détermination de retard fixe la durée de ce retard.

3.  Système selon la revendication 2, **caractérisé en ce que** le circuit de mesure fournit des indications de performances et **en ce que** le circuit de détermination de retard comporte en outre une série d'intégrateurs $C_{k,l}$, lesdits intégrateurs étant utilisés pour anticiper les différentes améliorations de performance pour différentes valeurs des éléments de retard et déterminer ainsi la valeur optimale du retard à appliquer.

4.  Système selon la revendication 2 ou 3, pour lequel les blocs ont des durées fixes, **caractérisé en ce que** les éléments de retard variable varient par incréments dont la valeur est égale à la durée d'un bloc.

5.  Dispositif d'émission (1, 100) convenant à un système selon l'une des revendications 1 à 4 comportant :

    -   un accès d'entrée (5), pour recevoir l'information à transmettre, des accès de sortie (7A, 7B) raccordés auxdits canaux, pour diffuser l'information à transmettre, un premier élément de retard d'émission (212) associé à l'un desdits accès pour retarder l'information à transmettre,
    -   des deuxièmes éléments de retard d'émission (214) associés aux autres accès de sortie,
    -   des moyens de commande de retard (230, 222, 224) associés a chacun desdits éléments de retard qui sont pilotés en fonction des mesures de qualités fournis par un récepteur dans un canal de retour, les mesures de qualités sont fondées sur la détermination du bruit impulsionnel établie à partir de deux intégrateurs $\gamma_{0,0}$ et $\gamma'_{0,0}$, lesdits intégrateurs donnant la présence de bruit impulsionnel par calcul de la proportion entre le nombre de blocs simultanément faux et le nombre de blocs faux observés sur une période d'intégration donnée.

6.  Dispositif de réception (10, 110) d'informations par au moins deux canaux convenant à un système selon l'une des revendications 1 à 4 comportant :

    -   des accès (11A, 11B) pour recevoir les informations desdits canaux,
    -   un circuit de mesure de qualités (250, 235) des différents canaux,
    -   un circuit de branchement pour sélectionner au moins un desdits canaux,
    -   un accès de sortie (20) relié au circuit de branchement pour fournir les informations transmises,
    -   un accès (236) pour un canal de retour pour transmettre vers un dispositif d'émission lesdites mesures de qualité,

    **caractérisé en ce que** les mesures de qualités sont fondées sur la détermination du bruit impulsionnel établie à partir de deux intégrateurs $\gamma_{0,0}$ et $\gamma_{0,0}$, lesdits intégrateurs donnant la présence de bruit impulsionnel par calcul de la proportion entre le nombre de blocs simultanément faux et le nombre total de blocs faux observés sur une période d'intégration donnée.

**Patentansprüche**

1. Übertragungssystem unter redundanter Verwendung von mindestens zwei Kanälen (CHA, CHB), ein System mit:

   - einer Sendeanordnung (1, 100) mit einem Eingangszugriff (5) für den Erhalt der zu übertragenden Information in der Form von Blöcken, mit den besagten Kanälen verbundene Ausgangszugriffe (7A, 7B) für die Ausstrahlung der zu übertragenden Information, einem ersten Element zum Verzögern der Übertragung (8) in Verbindung mit einem der besagten Zugriffe zum Verzögern der zu übertragenden Information,
   - einer Empfangsanordnung (10, 110) mit Zugriffen (11A, 11B) für den Erhalt der Informationen der besagten Kanäle, einer Schaltung zum Messen der Qualitäten (15) der unterschiedlichen Kanäle, einer Verbindungsschaltung (22) für die Auswahl einer der besagten Kanäle, einem Ausgangszugriff (20) in Verbindung mit der Verbindungsschaltung für die Ausgabe der übertragenen Informationen,
   - zweiten Elementen zur Verzögerung der Übertragung in Verbindung mit den andere Ausgangszugriffen, - Mitteln zur Steuerung der Verzögerung in Verbindung mit jedem der besagten Verzögerungselemente,
   - einem von der Empfangsanordnung zur Sendeanordnung verlaufenden Rückkanal,
   - einer Schaltung zur Bestimmung (235) der Verzögerung, um über den besagten Rückkanal die besagten Mittel zur Steuerung der Verzögerung unter Berücksichtigung der von der Schaltung zur Messung der Qualität erhaltenen Qualitätsmessungen zu steuern,

   **dadurch gekennzeichnet, dass** die Qualitätsmessungen auf der Bestimmung des anhand von zwei Integratoren $\gamma_{0,0}$ und $\gamma'_{0,0}$ festgelegten Impulsrauschens gründen, wobei die besagten Integratoren das Vorhandensein von Impulsrauschen aus der Berechnung der Proportion zwischen der Anzahl simultan falscher Blöcke und der Gesamtzahl falscher Blöcke, die in einer bestimmten Integrationsperiode beobachtet wurden, ableiten.

2. System nach Anspruch 1, **dadurch gekennzeichnet, dass** die Verzögerungselemente variabel sind und **dadurch**, dass die Schaltung zur Bestimmung der Verzögerung die Dauer dieser Verzögerung festlegt.

3. System nach Anspruch 2, **dadurch gekennzeichnet, dass** die Messschaltung Leistungsangaben liefert, und **dadurch**, dass die Schaltung zur Bestimmung der Verzögerung außerdem eine Serie von Integratoren $C_{k,l}$ enthält, wobei die besagten Integratoren verwendet werden, um den unterschiedlichen Verbesserungen der Leistung bei unterschiedlichen Werten der Verzögerungselemente zuvorzukommen und somit den optimalen Wert der anzuwendenden Verzögerung bestimmen.

4. System nach Anspruch 2 oder 3, in dem die Blöcke feste Dauern haben, **dadurch gekennzeichnet, dass** die variablen Verzögerungselemente um Inkremente variieren, deren Wert gleich der Dauer eines Blocks ist.

5. Sendeanordnung (1, 100) für ein System nach einem der Ansprüche 1 bis 4 mit:

   - einer Sendeanordnung (5) für den Erhalt der zu übertragenden Information, mit den besagten Kanälen verbundene Ausgangszugriffe (7A, 7B) für die Ausstrahlung der zu übertragenden Information, einem ersten Element zum Verzögern der Übertragung (2, 12) in Verbindung mit einem der besagten Zugriffe zum Verzögern der zu übertragenden Information,
   - zweiten Elementen zur Verzögerung der Übertragung (2, 14) in Verbindung mit den andere Ausgangszugriffen,
   - Mittel zur Steuerung der Verzögerung (230, 222, 224) in Verbindung mit jedem der besagten Verzögerungselemente, die unter Berücksichtigung der Qualitätsmessungen gesteuert werden, die von einem Empfänger in einem Rückkanal ausgegeben werden, wobei die Qualitätsmessungen auf der Bestimmung des anhand von zwei Integratoren $\gamma_{0,0}$ und $\gamma'_{0,0}$ festgelegten Impulsrauschens gründen und die besagten Integratoren das Vorhandensein von Impulsrauschen aus der Berechnung der Proportion zwischen der Anzahl simultan falscher Blöcke und der Gesamtzahl falscher Blöcke, die in einer bestimmten Integrationsperiode beobachtet wurden, ableiten.

6. Anordnung für den Empfang von Informationen (10, 110) über mindestens zwei Kanäle und geeignet für ein System gemäß einem der Ansprüche 1 bis 4 mit:

- Zugriffen (11A, 11B) für den Erhalt der Informationen der besagten Kanäle,
- einer Schaltung zum Messen der Qualitäten (250, 235) der unterschiedlichen Kanäle,
- einer Verbindungsschaltung für die Auswahl von mindestens einem der besagten Kanäle,
- einem mit der Verbindungsschaltung verbundenen Ausgangszugriff (20) für die Ausgabe der übertragenen Informationen,
- einem Zugriff (236) für einen Rückkanal für die Übertragung der besagten Qualitätsmessungen an eine Sendeanordnung,

**dadurch gekennzeichnet, dass** die Qualitätsmessungen auf der Bestimmung des anhand von zwei Integratoren $\gamma_{0,0}$ und $\gamma'_{0,0}$ festgelegten Impulsrauschens gründen, wobei die besagten Integratoren das Vorhandensein von Impulsrauschen aus der Berechnung der Proportion zwischen der Anzahl simultan falscher Blöcke und der Gesamtzahl falscher Blöcke, die in einer bestimmten Integrationsperiode beobachtet wurden, ableiten.

## Claims

1. Transmission system using in the redundancy mode at least two channels (CHA, CHB), which system comprises:

   - a transmitting apparatus (1, 100) having an input access (5) for receiving the information to be transmitted in the form of blocks, output accesses (7A, 7B) connected to said channels for broadcasting the information to be transmitted, a first transmission delay element (8) associated to one of said accesses to delay the information to be transmitted,
   - a receiving apparatus (10, 110) having accesses (11A, 11B) for receiving the information signals from said channels, a measuring circuit (15) for measuring the qualities of the various channels, a switching circuit (22) for selecting one of said channels, an output access (20) connected to the switching circuit to supply the transmitted information signals,
   - second transmission delay elements associated to the other output accesses,
   - delay control means associated to each of said delay elements,
   - a return channel going from the receiving apparatus to the transmitting apparatus,
   - a delay determining circuit (235) for controlling said delay control means by said return channel as a function of the quality measurements provided by the quality measuring circuit,

   **characterized in that** the quality measurements are based on the determination of impulse noise established on the basis of two integrators $\gamma_{0,0}$ and $\gamma'_{0,0}$, which integrators are used for detecting the presence of impulse noise by calculating the proportion of the number of simultaneously erroneous blocks to the total number of erroneous blocks observed over a given integration period.

2. System as claimed in claim 1, **characterized in that** the delay elements are variable and **in that** the delay determining circuit determines the duration of this delay.

3. System as claimed in claim 2, **characterized in that** the measuring circuit produces performance indicators and **in that** the delay determining circuit further includes a series of integrators $C_{k,l}$, which integrators are used for anticipating the various performance improvements for various values of the delay elements and thus for determining the optimum value of the delay to be applied.

4. System as claimed in claim 2 or 3, for which the blocks have fixed durations, **characterized in that** the variable delay elements vary in steps of which the value is equal to the duration of one block.

5. Transmitting apparatus (1, 100) suitable for a system as claimed in one of the claims 1 to 4, comprising

   - an input access (5) for receiving the information to be transmitted, output accesses (7A, 7B) connected to said channels, for broadcasting the information to be transmitted, a first transmission delay element (212) associated to one of said accesses for delaying the information to be transmitted,
   - second transmission delay elements (214) associated to the other output accesses,
   - delay control means (230, 222, 224) associated to each one of said delay elements which are controlled as a function of quality measurements produced by a receiver in a return channel, which quality measurements are based on the determination of the impulse noise established on the basis of two integrators $\gamma_{0,0}$ and $\gamma'_{0,0}$, which integrators are used for detecting the presence of impulse noise by calculating the proportion of the number of simultaneously erroneous blocks to the total number of erroneous blocks observed over a given integration period.

6. Receiving apparatus (10, 110) for receiving information signals by at least two channels suitable for a system as claimed in one of the Claims 1 to 4, comprising:

   - accesses (11A, 11B) for receiving the information signals from said channels,
   - a measuring circuit (250, 235) for measuring the quality of the various channels,
   - a switching circuit for selecting at least one of said channels,
   - an output access (20) connected to the switching circuit for producing the transmitted information signals,
   - an access (236) for a return channel for transmitting said quality measurements to a transmitting apparatus,

   **characterized in that** the quality measurements are based on the determination of the impulse noise established on the basis of two integrators $\gamma_{0,0}$ and $\gamma'_{0,0}$, which integrators are used for detecting the presence of impulse noise by calculating the proportion of the number of simultaneously erroneous blocks to the total number of erroneous blocks observed over a given integration period.

EP 0 744 847 B1

FIG.1

FIG.2

FIG. 3

EP 0 744 847 B1

FIG.4

FIG.5

311 □ ── EA$_0$(t)

351 □ ── EB$_0$(t)

400 — γ$_{0,0}$(t) — 402 — γ'$_{0,0}$(t)

405 — 236

250

235

## FIG.6

A

210

229

20'

5

212$_1$ 212$_2$ 212$_N$ 226

214$_1$ 214$_2$ 214$_N$ 228

230

100

CHA'

CHB'

CHA

CHB

200

255

110

250 φ

435

B

5'

20

## FIG.7

14

FIG. 8